# NEUE EUROPÄISCHE PATENTSCHRIFT

(11) **EP 0 979 329 B2**
(45) Veröffentlichungstag und Bekanntmachung des Hinweises auf die Entscheidung über den Einspruch: **18.11.2009**
(45) Hinweis auf die Patenterteilung: 16.04.2003
(21) Anmeldenummer: 99900866.7
(22) Anmeldetag: 02.02.1999
(51) Int. Cl.: E02D 17/20, E01F 7/04, B21D 11/07

(54) **DRAHTGEFLECHT FÜR EINEN STEINSCHLAGSCHUTZ ODER FÜR DIE SICHERUNG EINER ERDOBERFLÄCHENSCHICHT, SOWIE EIN VERFAHREN UND EINE VORRICHTUNG ZU DESSEN HERSTELLUNG**
WOVEN WIRE NETTING FOR PROTECTION AGAINST ROCK FALLS OR FOR SECURING A TOP LAYER OF SOIL, AND METHOD AND DEVICE FOR PRODUCING SAME
TREILLIS EN FILS METALLIQUES POUR LA PROTECTION CONTRE LES CHUTES DE PIERRES OU POUR LA CONSOLIDATION D'UNE COUCHE TERRESTRE SUPERFICIELLE, ET PROCEDE ET DISPOSITIF POUR LA FABRICATION D'UN TEL TREILLIS

(30) Priorität: 25.02.1998 CH 46598
(43) Veröffentlichungstag der Anmeldung: 16.02.2000
(73) Patentinhaber: FATZER AG, CH-8590 Romanshorn (CH)
(72) Erfinder: EICHER, Bernhard, CH-9315 Winden (CH)
(74) Vertreter: Luchs, Willi
(86) Internationale Anmeldenummer: PCT/CH1999/000044
(87) Internationale Veröffentlichungsnummer: WO 1999/043894

(56) Entgegenhaltungen:
- EP-A- 0 491 195
- WO-A-97/43489
- AT-A- 252 541
- DE-A- 4 012 970
- FR-A- 2 629 492
- FR-A- 2 669 047
- US-A- 795 529
- US-A- 2 621 702
- US-A- 3 667 509
- US-A- 4 049 224
- US-A- 4 209 153
- US-A- 5 161 917

## Beschreibung

Die Erfindung betrifft ein Drahtgeflecht für einen Steinschlagschutz oder für die Sicherung einer Erdoberflächenschicht, welches aus korrosionsbeständigen Drähten geflochten ist und entweder auf der Erdoberfläche ausgelegt oder in annähernd aufrechter Stellung an einem Hang oder ähnlichem befestigt ist.

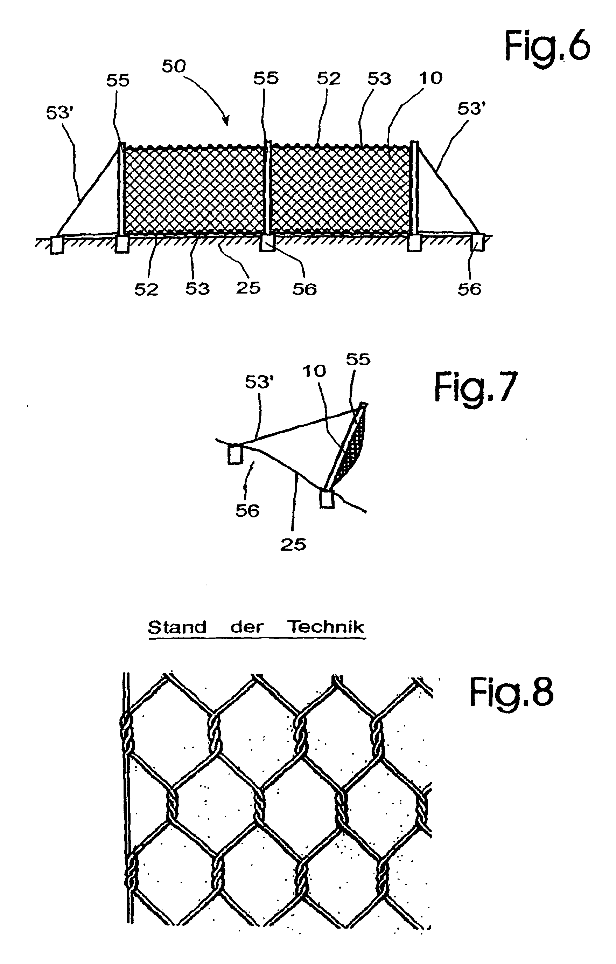

Bei einem sehr häufig verwendeten bekannten Drahtnetz ist dasselbe aus einem sechseckigen Drahtnetz gebildet, wie dies in der anliegenden Zeichnung (Fig.8) dargestellt ist. Ein solches Drahtnetz besteht aus verzinkten Stahldrähten mit niedrigen Biege- und Zug-Festigkeitswerten, damit dieses beim Flechten verdrillt werden kann. Die sechseckige Form der einzelnen Maschen ergibt sich nach der mehrfachen Verdrillung von zwei zusammengeflochtenen Drähten, wobei diese verdrillten Stellen in Längsrichtung des Geflechtes und die einzelnen Drähte dazwischen diagonal verlaufen. Im hergestellten und eingesetzten Zustand bilden diese Drahtnetze eine annähernd zweidimensionale Form, d.h. im Querschnitt betrachtet ist dieses Drahtnetz annähernd linienförmig ausgebildet, da sich diese Drähte aufgrund ihrer niedrigen Festigkeit mit wenig Kraftaufwand in jede Form biegen lassen. Diese Drahtnetze werden für die Lagerung und den Transport zusammengerollt und sie benötigen dafür viel Platz. Beim Abrollen dieser Netze am Montageplatz besteht dabei ein weiterer Nachteil darin, dass diese Netze sich durch das Zusammenrollen von selbst sehr schnell öffnen und strecken.

Bei der Verwendung solcher Drahtnetze als Böschungssicherungselemente auf steilen, instabilen Böschungen müssen diese mit Drahtseilen verstärkt werden, welche in regelmässigem Abstand in Diagonal-, in Längsund/oder in Querrichtung über dem Drahtgeflecht gespannt oder in dieses eingeflochten sind. Ausserdem sind sie mit Randverstärkungen zu versehen und die im Erdreich verankerten Befestigungselemente sind in einem regelmässigen Abstand von einem bis fünf Metern über den gesamten Bereich vorzusehen, damit die Drahtnetze eine ausreichende flächendeckende Stützung der gleitgefährdeten Deckschicht bzw. der gelösten Oberflächenzone gewährleisten. Die Drahtnetze sind aber an den verdrillten Stellen einer erhöhten Bruchgefahr ausgesetzt.

Der vorliegenden Erfindung wurde demgegenüber die Aufgabe zugrundegelegt, ein Drahtgeflecht nach der eingangs erwähnten Gattung zu schaffen, welches derart ausgebildet ist, dass mit ihm gegenüber den bekannten Drahtgeflechten eine kostengünstigere und gewichtsmässig leichtere Abdeckung zwecks einfacherer Montage auf einer Böschung oder einer Steinschlagschutzverbauung erzielt wird. Ausserdem sollen mit diesem Drahtgeflecht bei der Verwendung als Böschungssicherung verbesserte Voraussetzungen für die Verfestigung von Vegetationsschichten oder für ein Festhalten von Humus oder Spritzschichten auf dem abgedeckten Boden geschaffen werden. Ferner soll dieses Drahtgeflecht für die Lagerung und den Transport platzsparend zusammenlegbar sein.

Erfindungsgemäss ist die Aufgabe durch die Merkmale des Anspruchs 1 gelöst, wobei die Drähte des Drahtgeflechtes aus einem hochfesten Stahl hergestellt sind, und wobei dieser Stahldraht gegenüber den bekannten Drahtgeflechten vorteilhaft eine bis zu dreifach erhöhte Zugfestigkeit aufweisen soll, welche im Bereich von 1000 bis 2200 N/mm² liegt.

Mit diesem erfindungsgemässen Drahtgeflecht kann im Vergleich zu einem bekannten Drahtgeflecht für eine bestimmte Abdeckfläche bei einer vorausgesetzten Nennfestigkeit mehr als die Hälfte an Gewicht eingespart werden, wobei hieraus erhebliche Kosteneinsparungen beim Materialbedarf als auch bei der Verlegung und Montage eines solchen Geflechtes entstehen. Durch die hohe Biegefestigkeit der Drähte lässt sich ferner bei einem allfälligen Drahtbruch die Gefahr des Entstehens einer Laufmasche reduzieren.

Mit diesem erfindungsgemässen Drahtgeflecht wird aufgrund seiner erhöhten Biegefestigkeit auch im gestreckten Zustand eine dreidimensionale oder matratzenförmige Struktur erzielt. Damit kann dieses Geflecht bei der Abdeckung eines Erdbodens, bspw. einer Böschung, zusätzlich als Halterung oder Stabilisierung von Vegetationsschichten oder von aufgespritzten Abdeckungen dienen.

Ein weiterer Vorteil mit diesem Drahtgeflecht besteht darin, dass sich dieses Geflecht, das aus zusammengeflochtenen einzelnen wendelförmig gebogenen Drähten besteht, zusammenlegen lässt und dementsprechend für die Lagerung und den Transport weniger Platz in Anspruch nimmt.

Ausführungsbeispiele der Erfindung sowie weitere Vorteile derselben sind nachfolgend anhand der Zeichnung näher erläutert. Es zeigt:
- Fig. 1: eine Draufsicht eines erfindungsgemässen Drahtgeflechtes,
- Fig.2: einen Schnitt des Drahtgeflechtes entlang der Linie II-II nach Fig.1,
- Fig.3: eine schematische perspektivische Darstellung eines erfindungsgemässen Drahtgeflechtes als Böschungssicherung,
- Fig.4: eine Ansicht einer Krallplatte der Böschungssicherung nach Fig.3,
- Fig.5: einen teilweisen Schnitt der Böschungssicherung nach Fig.3,
- Fig.6: eine schematische Draufsicht eines Drahtgeflechtes bei einer Steinschlagschutzverbauung,
- Fig.7: eine schematische Seitenansicht der Steinschlagschutzverbauung nach Fig.6,
- Fig.8: eine schematische Teilansicht eines bekannten Drahtgeflechtes mit verdrillten Drähten,
- Fig.9 bis Fig.11: eine schematische perspektivische Darstellung einer Vorrichtung für die Herstellung des Drahtgeflechtes in verschiedenen Arbeitspostionen, und
- Fig.9a bis Fig. 11a: je eine schematische Vorderansicht der Vorrichtung in den Arbeitspositionen nach Fig.9 bis Fig.11.

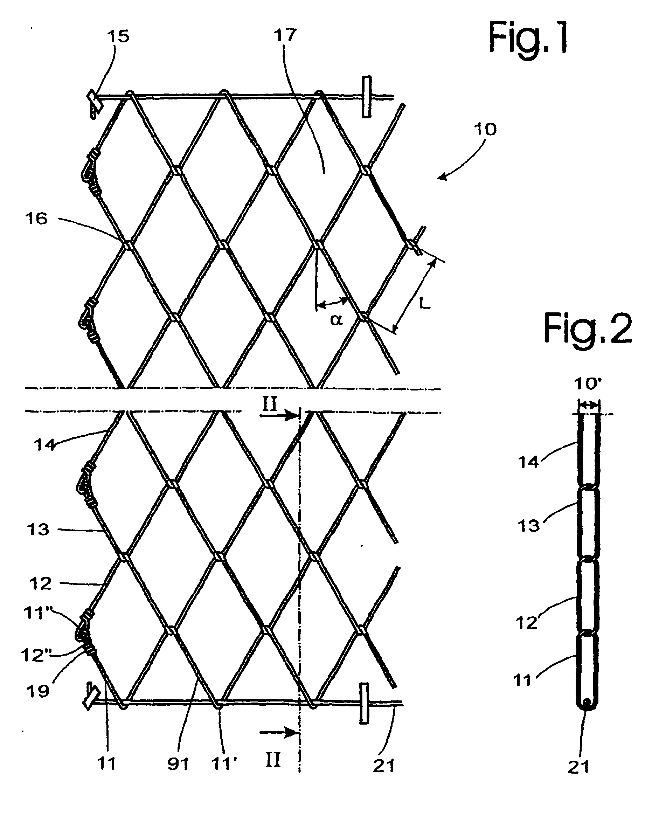

Fig.1 zeigt ein Drahtgeflecht 10 für eine Sicherung der Erdoberflächenschicht, wie beispielsweise eine Böschungssicherung oder eine Felswandsicherung an einer Strasse oder ähnlichem. Dieses Drahtgeflecht 10 ist hierbei aus geflochtenen Drähten 11, 12, 13, 14 zusammengesetzt und von im Erdreich versenkten Befestigungselementen 15 auf dem Erdboden in einer definierten Verspannung gehalten. Diese Drähte sind üblicherweise verzinkt, mit einer Beschichtung aus Zink-/Aluminium und/oder einem Kunststoffüberzug oder aus einer Chromlegierung versehen, um die erforderliche Korrosionsbeständigkeit zu erreichen. Hierzu ist beispielsweise ein verzinkter Überzug mit einem Flächengewicht zwischen 100 und 250 g/m² vorgesehen.

Erfindungsgemäss sind die Drähte 11, 12, 13, 14 des Drahtgeflechtes 10 aus einem hochfesten Stahl hergestellt. Für diese hochfesten Stahldrähte 11, 12, 13, 14 werden vorzugsweise solche verwendet, die zu Drahtseilen verseilt werden. Solche Drähte weisen nach der DIN-Norm 2078 eine Nennfestigkeit zwischen 1000 und 2200 N/mm² auf, beispielsweise eine solche von 1770 N/mm². Es könnten jedoch auch Federstahldrähte nach der DIN-Norm 17223 benutzt werden. Die Drahtdicke beträgt vorteilhaft zwischen einem und fünf Millimetern. Dies hängt von der erforderlichen Zugfestigkeit ab.

Das Drahtgeflecht 10 ist aus einem viereckigen Diagonalgeflecht gebildet, bei dem die einzelnen wendelförmig gebogenen Drähte 11, 12, 13, 14 einen Steigungswinkel α sowie eine Länge L zwischen zwei Biegungen aufweisen, welche die Form und Grösse der Maschen 17 des Drahtgeflechtes 10 bestimmen. Für den Steigungswinkel α ist vorteilhaft ein Winkelbetrag von annähernd 30° gewählt. Die einzelnen Maschen 17 bilden jeweils ein Rhomboid, wobei die Maschenweite beispielsweise 77 x 143 mm beträgt. Dies bietet den Vorteil, dass sich das Geflecht 10 nicht erheblich streckt, wenn es auf eine Erdoberfläche ausgelegt und von den Seilen 21 in seiner Längserstreckung auf Zug vorgespannt wird. Zudem bilden hierdurch die einzelnen Maschen 17 ein Rhomboid mit einer länglichen Öffnung, die den Vorteil einer geringeren Durchlässigkeit von Erdmaterial ergibt.

An den seitlichen Enden sind die Drähte 11, 12, 13, 14 paarweise durch Schlaufen 11", 12" gelenkig miteinander verbunden, wobei diese Schlaufen 11", 12" durch die endseitig abgebogenen Drähte selbst gebildet sind. Die Drähte sind, nachdem sie zu Schlaufen gebogen sind, zusätzlich mit vorzugsweise mehreren um ihren eigenen Umfang gewundenen Schlingen 19 versehen, welche aufgrund der im eingesetzten Zustand entstehenden Zugbelastung auf diese Schlaufen eine ausreichende Sicherheit gegen ein Öffnen derselben gewährleisten.

Hieraus ergibt sich im Rahmen der Erfindung der weitere Vorteil, dass die einzelnen Drähte im geflochtenen Zustand zueinander gelenkig gehalten sind, was zur Folge hat, dass sich dieses Drahtgeflecht 10 wie eine Matte zusammenlegen bzw. zusammenrollen lässt. Demzufolge wird ein geringer Platzbedarf für die Lagerung und den Transport solcher Geflechte benötigt.

Vorzugsweise ist in den am oberen und unteren Ende des Geflechtes 10 befindlichen Randdraht 11 je ein Draht oder ein Seil 21 eingeschlauft, welches seinerseits von den Befestigungselementen 15 auf den Boden oder dergleichen gespannt ist. Im Prinzip könnten die Befestigungselemente 15 aber auch unmittelbar die Drahtschlaufen 11' halten.

Gemäss Fig.2 weist das Geflecht 10 eine dreidimensionale, matratzenartige Struktur auf, was wiederum durch die Verwendung des hochfesten Stahldrahtes ermöglicht wird. Die einzelnen Drähte 11, 12, 13, 14 sind zu diesem Zwecke derart wendelförmig gebogen und anschliessend miteinander verflochten, dass das die gebogenen Drähte und das hieraus entstehende Geflecht 10 im Querschnitt betrachtet einen annähernd rechteckigen Umriss bilden. Die Drähte bestehen daher aus gebogenen Teilen 11' und geraden Teilen 91. Dieses längliche Rechteck hat eine Dicke von mehreren Drahtdicken. Damit ist dieses Drahtgeflecht 10 auch im vorgespannten Zustand nicht wie das bekannte Drahtgeflecht gemäss Fig.8 annähernd linienoder bandförmig, sondern dreidimensional ausgebildet. Dies bewirkt zum einen eine erhöhte Federungseigenschaft des Geflechtes, denn diese Drähte lassen sich bei steigernder Verspannung in ihrer Längsausdehnung strecken und vermitteln diesem Netzgeflecht eine erhöhte Elastizität. Zum andern wird durch diese dreidimensionale Ausbildung bei der Abdeckung eines Erdbodens, bspw. einer Böschung, zusätzlich eine Stützung oder Stabilisierung der in dieses Geflecht eingebrachten Vegetationsschichten oder von aufgespritzten Abdeckungen erzielt.

Nebst der Maschenweite kann auch je nach Anwendung des Geflechtes 10 dessen Dicke 10' variiert werden. Diese Dicke 10' wird beim Biegen jedes einzelnen Drahtes 11, 12, 13, 14 definiert. Sie beträgt ein Mehrfaches, vorteilhaft zwischen 3 bis 10 mal der Drahtdicke, wie dies in Fig.2 verdeutlicht ist.

Mit diesem Drahtgeflecht ergibt sich gegenüber dem bekannten sechseckigen Geflecht - wie in Fig.8 gezeigt ist - durch den annähernd geradlinig in Diagonalrichtung entstehenden Kraftfluss ein optimaler Kraftverlauf und hieraus eine verbesserte Verspannung das abgedeckten Erdbodens. Lokale Krafteinwirkungen auf das Drahtgeflecht werden in den Diagonalen auf die Seiten übertragen und damit von mehreren Befestigungselementen aufgenommen.

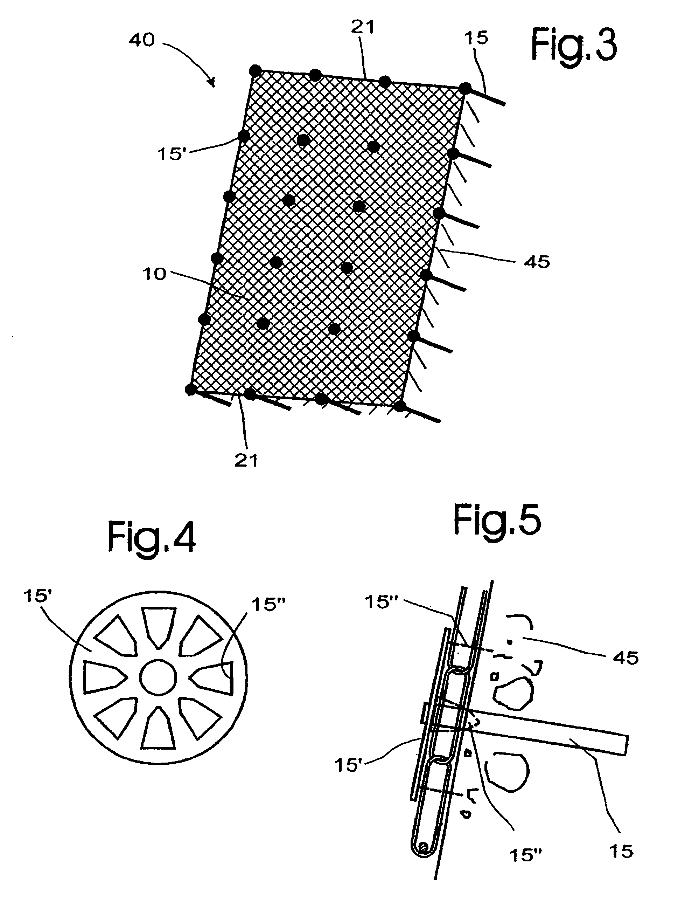

Fig.3 zeigt ein erfindungsgemässes Drahtgeflecht 10 als Böschungssicherung 40 beispielsweise einer an einem steilen Abhang befindlichen Böschung 45, welche die zu sichernde Erdoberflächenschicht bildet. Diese Böschungssicherung 40 besteht aus dem über einen gewünschten Böschungsbereich ausgelegten Drahtgeflecht 10 und aus den in den Boden versenkten Befestigungselementen 15 mit das Geflecht 10 auf die Erdoberfläche drückenden Krallplatten 15' oder dergleichen. Für die Befestigungselemente 15 werden an sich bekannte Boden- oder Felsnägel gebraucht, welche vorzugsweise in einem regelmässigen Abstand in der Böschung 45 befestigt sind. Am oberen und unteren Ende des Geflechtes 10 ist ieweils ein Seil 21 vorgesehen, mittels welchen das Geflecht 10 mit einer Zugkraft gestreckt ist.

Fig.4 und Fig.5 zeigen die Krallplatte 15', welche aus einem wie dargestellt runden, ovalen oder andersförmigen Blech und aus mehreren aus diesem Blech rechtwinklig nach unten vorstehenden abgebogenen Krallen 15" besteht, welche jeweils keilförmig ausgebildet sind. Eine jeweilige Krallplatte 15' ist vom Befestigungselement 15 auf das Drahtgeflecht 10 gedrückt und sie bewirkt eine dauerhafte Sicherung der Böschung 45 durch das auf der gesamten Auflageläche wirkende Drahtgeflecht 10. Die durch das Geflecht sich erstreckenden Krallen 15" bewirken durch ihre Keilformen eine Verkeilung mit dem Drahtgeflecht.

Um bei weichen Bodenverhältnissen eine möglichst hohe definierte Vorspannung auf die Befestigungselemente zu übertragen, kann unter der Krallplatte 15' und unter dem Geflecht ein Textilkissen mit einer Flächenausdehnung von bis zu mehr als einem Quadratmeter unterlegt werden, wobei dieses witterungsbeständige Textilkissen mit einer mit Druck injizierten Mörtelmasse oder dergleichen gefüllt ist. Um bei felsigem, zerklüftetem Untergrund auch bei denjenigen Stellen, bei denen zwischen der Böschungsoberfläche und dem Geflecht Hohlräume vorhanden sind, ein Kontakt herzustellen, können ebenfalls solche Textilkissen unterlegt werden.

Anhand dieses Ausführungsbeispieles ist verdeutlicht, dass sich zum einen eine erleichterte Montage und zum andern durch die matratzenartige Struktur des Geflechtes 10 eine verbesserte Abdeckung ergibt. Solche Böschungen 45 sind häufig durch steile Abhänge gebildet und daher sehr schlecht zugänglich. Die Geflechte müssen sogar mit Helikoptern herbeigeführt werden. Wenn nun dieses Geflecht gegenüber den bekannten weniger als die Hälfte des Gewichtes aufweist, kann der Transport und das Verlegen mit entsprechend kleinerem Aufwand ausgeführt werden.

Diese Böschungssicherung 40 kann zu verschiedenen Zwecken verwendet werden, wie zum Beispiel gemäss der Darstellung zur Verhinderung einer Erosion der Erdoberflächenschicht 45, aber auch gegen Steinschlag, gegen ein Ausbrechen von Steinen und Blöcken oder ähnlichem, gegen ein Gleiten der Erdoberflächenschicht oder als Stützung der Wurzelschicht der sich auf diesen Böschungen entstehenden Vegetationen.

Fig.6 und Fig.7 zeigen ein erfindungsgemässes Drahtgeflecht 10 für die Verwendung eines Steinschlagzaunes 50, welcher sich zum Auffangen von von Steinen, Felsblöcken, Baumstämmen oder anderen Gegenständen eignet, die in der Regel mit dem Spitz voran mit grosser Geschwindigkeit talwärts gleiten. Dieses Drahtgeflecht 10 ist in annähernd aufrechter Stellung mit einem annähernd rechtwinkligen Verlauf an einem Berghang 25 angeordnet und es ist hierbei an Stützpfosten 55 aus Stahl festgehalten, welche jeweils im Boden 56 verankert sind. Das Drahtgeflecht 10 ist über Drahtseile 52 oben und unten an horizontalen Spannseilen 53 festgehalten, wobei dieses Geflecht von den Drahtseilen 52 mit dem jeweiligen Spannseil vernäht ist. Die Spannseile 53 sind einerseits an den Stützpfosten 55 gehalten und andererseits mit ihren Seilenden 53' an je einem Fundament oder dergleichen befestigt und gespannt.

Durch die elastischen Federeigenschaften des hochfesten Drahtgeflechtes 10 lassen sich hohe kinetische Energien, die beim Aufprall von Steinen oder Baumstämmen anfallen, abbauen. Die lokale Krafteinwirkung des aufschlagenden Steines oder dergleichen verteilt sich gleichmässig in alle Richtungen. Hierbei entsteht ein weiterer Vorteil mit diesem Drahtgeflecht nach der Erfindung, denn dasselbe kann im Gegensatz zu bekannten Drahtgeflechten mit niedrigen Festigkeitswerten innerhalb des um eine Vielfaches höheren elastischen Bereiches bedeutend grössere Kräfte aufnehmen, wodurch nebst den geringeren Herstellungs- und Installationskosten bedeutend weniger Reparaturarbeiten anfallen.

Fig.8 zeigt ein sich bewährtes bekanntes geflochtenes Drahtgeflecht, welches einleitend erläutert worden ist und daher nachfolgend nicht mehr im Detail beschrieben ist.

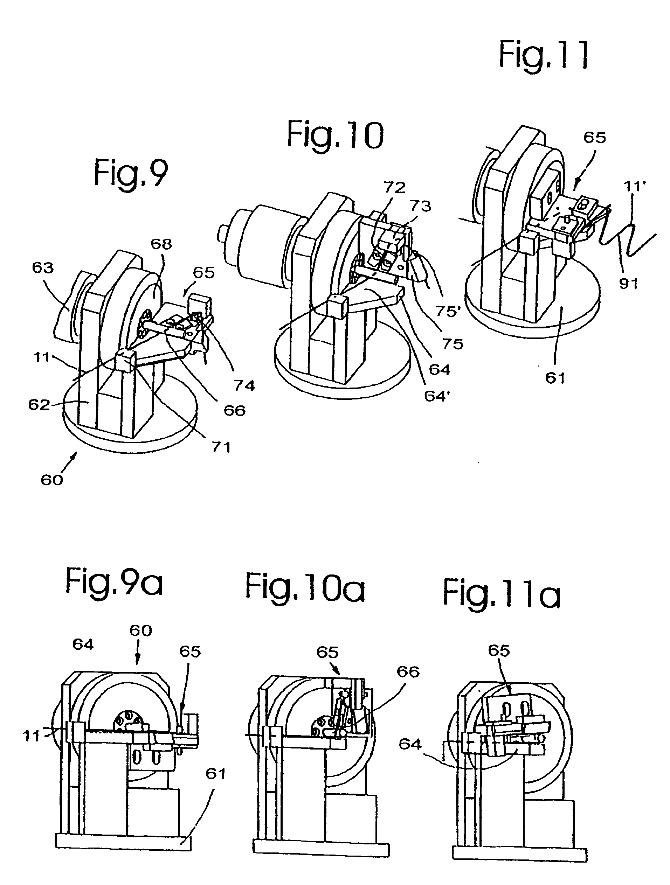

Fig.9 bis Fig. 11 zeigen eine Vorrichtung 60, mittels welcher das erfindungsgemässe Verfahren zur Herstellung des Drahtgeflechtes 10 aus einzelnen hochfesten Stahldrähten 11 durchgeführt wird. Diese Vorrichtung 60 besteht im wesentlichen aus einem Sockel 61 mit einem Ständer 62, einem Schwenkantrieb 63, einer mit letzterem drehverbundenen Biegeeinheit 65, einer Führungsplatte 64 sowie einem Biegedorn 66. Der Schwenkantrieb 63 ist am Ständer 62 befestigt und er treibt ein die Biegeeinheit 65 tragendes Drehfutter 68 an, wobei letzteres mit seiner horizontalen Schwenkachse konzentrisch zu dem zylindrisch ausgebildeten Biegedorn 66 ausgerichtet ist. Die Führungsplatte 64 hat eine horizontale Führungsfläche 64', welche in einem Abstand unterhalb des ebenfalls horizontalen Biegedorns 66 angeordnet ist. In der Verlängerung zu dieser Führungsfläche 64' ist eine Schwenkplatte der Biegeeinheit 65 angeordnet, welche am Drehfutter 68 des Schwenkantriebes 63 befestigt ist. Dieser Biegeeinheit 65 sind ausserdem eine Führungsnut 72, ein Anschlag 73, ein vor diesem angeordneten Zapfen 74 sowie ein eine Ausnehmung 75' aufweisendes Halteglied 75 zugeordnet, welche allesamt an der Schwenkplatte gehalten sind.

Gemäss Fig.9 bzw. Fig.9a wird der aus hochfestem Stahl bestehende Draht 11 seitlich zwischen dem Drehfutter 68 und einem Stützelement 71 auf die Führungsplatte 64 und unter dem Biegedorn 66 hindurchgeführt. Nachfolgend ist er durch die Führungsnut 72 bis zum Anschlag 73 geschoben. Dies kann maschinell mittels einer nicht näher gezeigten Vorschubeinrichtung erfolgen. Durch diese Führungsnut 72 ist der Draht 11 zum Biegedorn 66 mit dem Steigungswinkel α ausgerichtet und er weist vom Biegedorn 66 bis zum Anschlag die Länge L auf. Dieser Steigungswinkel α sowie die Länge L, die je nach Bedarf eingestellt werden können, bestimmen wie bereits oben erwähnt die Form und Grösse der Maschen 17 des Drahtgeflechtes 10. Der Zapfen 74 dient ferner als Führung, wenn der Draht 11 bereits gebogen worden ist, wobei letzterer ausgehend von diesem Zapfen 74 zusätzlich vom Halteglied 75 geführt ist.

Gemäss Fig.10 und Fig.10a wird die Biegeeinheit 65 von dem gesteuerten Antrieb 63 um den *Biegedorn* 66 geschwenkt, wobei sie annähernd in der vertikalen Position dargestellt ist.

Sobald die Biegeeinheit 65 um 180° geschwenkt und gemäss Fig.11 bzw. Fig.11a annähernd parallel über der Führungsplatte 64 liegt, ist der von ihr zentrierte Draht 11 um den *Biegedorn* 66 ebenfalls um annähernd 180° gebogen. In der Folge kann diese Biegeeinheit 65 wieder in die in Fig.9 gezeigte Ausgangsposition zurückgeschwenkt werden, indessen der Draht 11 in der gebogenen Position verbleibt. Nach dem Zurückschwenken der Biegeeinheit 65 wird der um den *Biegedorn* 66 herumgeführte Draht 11 in seiner Längsachse wieder bis zum Anschlag 73 vorgeschoben und am Zapfen 75 bzw. am Halteglied 75 zentriert. Anschliessend erfolgt die nächste Schwenkbewegung in entsprechender Weise. Nach mehrmaligem um 180° erfolgten Hin- und Herschwenken der Biegeeinheit 65 und dem Nachschieben des Drahtes wird der gemäss Fig.1 ersichtliche wendelförmige Draht mit gebogenen Teilen 11' und geraden Teilen 91 erzeugt. Durch dieses Verfahren wird als weiterer Vorteil auf den wendelförmig gebogenen Draht 11 eine gleichmässige Steigung im Winkel α sowohl im gebogenen Teil 11'als auch im geraden Teil erzielt.

Nachdem von der Vorrichtung 60 solche wendelförmige Drähte 11 gebogen worden sind, können diese in an sich herkömmlicher Weise zu dem Drahtgeflecht 10 zusammengeflochten werden. Die gebogenen Drähte werden zu diesem Zwecke einer an den andern ineinander eingefädelt, bis das Drahtgeflecht in der gewünschten Grösse erzeugt ist.

Die Erfindung ist mit den erwähnten Ausführungsbeispielen ausreichend dargetan. Es könnten *jedoch* beispielsweise die einzelnen Drähte anders als dargestellt gebogen sein. Der Steigungswinkel α der Drähte beträgt im erläuterten Ausführungsbeispiel ca. 30°, er kann jedoch je nach Bedarf zwischen 15° und 45° vorgesehen sein.

Die Erfindung eignet sich für alle Arten von Abdeckungen von Erdoberflächenschichten, zum Beispiel auch für eine solche im Untertagbau. So könnten in der oben veranschaulichten Weise Wandungen und Gewölbe von Tunnels, Hallen, Kavernen oder ähnlichem mit diesen erfindungsgemässen Drahtgeflechten ausgekleidet und entsprechend befestigt werden. Mit dieser Drahtgeflechtabdeckung kann bei Tunnelabdeckungen in kostengünstiger Ausführung ein Lösen von ausgebrochenem Gestein an diesen Wänden sicher aufgefangen werden.

Das Drahtgeflecht 10 kann in der beschriebenen Weise als Armierung oder Verstärkung von Fundationsschichten im Strassen- oder Wegebau oder bei Baupisten verwendet werden, indem diese Geflechte im entsprechenden Unter- oder Oberbau eingelegt werden. Des weiteren kann es als Armierung von Teer- oder Betonbelägen, wie beispielsweise von bituminös oder hydraulisch gebundenen Belägen eingesetzt werden.

## Patentansprüche

1. Drahtgeflecht für einen Steinschlagschutz oder für die Sicherung einer Erdoberflächenschicht, welches aus korrosionsbeständigen Drähten (11, 12, 13, 14) geflochten ist und entweder auf der Erdoberfläche ausgelegt oder in annähernd aufrechter Stellung an einem Hang oder ähnlichem befestigt ist, wobei das Drahtgeflecht (10) aus einzelnen wendelförmig gebogenen Drähten (11, 12, 13, 14) geflochten ist, wobei die Drähte jeweils mit einem Steigungswinkel (α) versehen sind,
**dadurch gekennzeichnet, dass**
die Drähte (11, 12, 13, 14) des Drahtgeflechtes (10) aus einem hochfesten Stahl hergestellt sind und das aus diesen Drähten (11, 12, 13, 14) geflochtene Drahtgeflecht (10) eine dreidimensionale Struktur aufweist.

2. Drahtgeflecht nach Anspruch 1, **dadurch gekennzeichnet, dass** der hochfeste Stahldraht eine Nennfestigkeit im Bereich von 1000 bis 2200 N/mm² aufweist und hiefür Stahldraht für Drahtselte oder Federstahldraht verwendbar ist.

3. Drahtgeflecht nach Anspruch 1 oder 2, **dadurch gekennzeichnet, dass** die wendelförmig gebogenen Drähte jeweils mit einem Steigungswinkel (α)zwischen 25° und 35° versehen sind.

4. Drahtgeflecht nach einem der vorhergehenden Ansprüche 1 bis 3, **dadurch gekennzeichnet, dass** das Drahtgeflecht (10) ein viereckiges Diagonalgeflecht mit rhomboidförmigen Maschen (17) und eine dreidimensionale matratzenartige Struktur bildet.

5. Drahtgeflecht nach Anspruch 4, **dadurch gekennzeichnet, dass** das dreidimensional ausgebildete Drahtgeflecht (10) eine Dicke (10') aufweist, die ein Mehrfaches der Drahtdicke beträgt.

6. Drahtgeflecht nach einem der vorhergehenden Ansprüche, **dadurch gekennzeichnet, dass** die Drähte (11, 12, 13, 14) an ihren Enden paarweise durch Schlaufen (11", 12") oder dergleichen gelenkig miteinander verbunden sind.

7. Drahtgeflecht nach Anspruch 6, **dadurch gekennzeichnet, dass** die Drähte nach dem Umbiegen zu Schlaufen (11", 12") zusätzlich mit vorzugsweise mehreren um ihren eigenen Umfang gewundenen Schlingen (19) versehen sind.

8. Drahtgeflecht nach einem der vorhergehenden Ansprüche, **dadurch gekennzeichnet, dass** das Drahtgeflecht (10) bei der Verwendung für eine Böschungssicherung von mehreren Befestigungselementen (15) gehalten ist, wobei letztere das Geflecht auf die Böschung (45) andrückende Krallplatten (15') aufweisen, welche aus einem runden, ovalen oder andersförmigen Blech oder dergleichen und aus mehreren aus diesem Blech rechtwinklig nach unten vorstehenden, keilförmigen Krallen (15") bestehen.

9. Verfahren sur Herstellung eines Drahtgeflechts für einen Steinschlagschutz oder für die Sicherung einer Erdoberflächenschicht, welches aus korrosionsbeständigen Drähten (11, 12, 13, 14) geflochten ist und entweder auf der Erdoberfläche ausgelegt oder in annähernd aufrechter Stellung an einem Hang oder ähnlichem befestigt ist, wobei die Drähte (11, 12, 13, 14) des Drahtgeflechtes (10) aus einem hochfesten Stahl hergestellt sind und das aus diesen Drähten (11; 12, 13, 14) geflochtene Drahtgeflecht (10) eine dreidimensionale Struktur aufweist; und bei dem das Drahtgeflecht (10) aus einzelnen wendelförmig gebogenen Drähten (11, 12, 13, 14) besteht, **dadurch gekennzeichnet, dass** der aus hochfestem Stahl bestehende Draht (11, 12, 13, 14) in einem definierten Steigungswinkel (α) wenigstens zu einem Biegedorn (66) zugeführt und in einer definierten Länge (L) um den Biegedorn (66) um annähernd 180° gebogen wird, dass der Draht mehrmals in seiner Längsachse zum Biegedorn (66) um die definierte Länge (L) nachgeschoben und jeweils um den Biegedorn um 180° gebogen wird, bis dieser Draht eine wendelförmige Ausbildung hat.

10. Verfahren nach Anspruch 9, **dadurch gekennzeichnet, dass** ein wendelförmig gebogener Draht mit einem zweiten wendelförmig gebogenen Draht zusammengeflochten, der zweite mit einem dritten und dies wiederholt wird bis das Drahtgeflecht in der gewünschten Grösse erzeugt ist

11. Vorrichtung zur Durchführung des Verfahrens nach Anspruch 9 oder 10, mit einer Führungsfläche (64') für einen zu biegenden Draht (11, 12, 13, 14), einem Biegedorn (66) und eine von einem Schwenkantrieb (63) drehbare Biegeeinheit (65), durch welche der Draht (11, 12, 13, 14) um den Biegedorn (66) biegbar ist, wobei die Biegeeinheit (65) mit ihrer Schwenkachse konzentrisch zum Biegedorn (66) ausgerichtet ist, **dadurch gekennzeichnet, dass** der Biegedorn (66) zu der Führungsfläche (64') beabstandet ist, und die Biegeeinheit (65) beim Schwenken den von ihr zentrierte Draht (11, 12, 13, 14), der korrosionsbeständig und aus einem hochfesten Stahl hergestellt ist, mit dem Steigungswinkel (α) um den Biegedorn (66) um annähernd 180° biegt, und dass eine Vorschubeinrichtung vorgesehen ist, welcher den Draht um die Länge (L) entlang seiner Längsachse auf der Führungsfläche (64') nachschiebt.

## Claims

1. Wire netting for a gravel screen or for protecting a soil surface layer, which is woven from corrosion-resistant wires (11, 12, 13, 14) and is either fitted on the soil surface or is secured in an almost upright position on a slope or something similar, whereby the wire netting (10) is woven from single spiral-shaped bent wires (11, 12, 13, 14), whereby each of the wires are provided with an angle of inclination (α),
**characterised in that**
the wires (11, 12, 13, 14) of the wire netting (10) are manufactured from heavy-duty steel and that the wire netting (10) woven by these wires (11, 12, 13, 14) has a three-dimensional structure.

2. Wire netting according to claim 1, **characterised in that** the heavy-duty steel wire has a nominal strength of in the region of 1000 to 2200 N/mm² and steel wire for stranded wires or spring steel wire may be used.

3. Wire netting according to claim 1 or 2, **characterised in that** the spiral-shaped bent wires are respectively provided with an angle of inclination (α) of preferably between 25° and 35°.

4. Wire netting according to one of the preceding claims 1 to 3, **characterised in that** the wire netting (10) forms a rectangular, diagonal netting with rhomboid-shaped meshes (17) and a three-dimensional, mattress-like structure.

5. Wire netting according to claim 4, **characterised in that** the three-dimensionally shaped wire netting (10) has a thickness (10') which amounts to many times the wire thickness.

6. Wire netting according to anyone of the preceding claims, **characterised in that** the wires (11, 12, 13, 14) are flexibly linked in pairs to each other at their ends by loops (11", 12") or such like.

7. Wire netting according to claim 6, **characterised in that**, after being bent over into loops (11", 12"), the wires are in addition preferably provided with several loops (19), which are wound around their own circumference.

8. Wire netting according to anyone of the preceding claims, **characterised in that** the wire netting (10), while being used for embankment protection, is held on by several revetments (15), whereby the latter have gripping plates (15') which press the netting on to the embankment (45), which consist of round, oval or alternatively shaped sheeting or such like and of several wedge-shaped grips (15") at a right angle and projecting downwards.

9. Process for manufacturing wire netting of a wire netting for a gravel screen or for protecting a soil surface layer, which is woven from corrosion-resistant wires (11, 12, 13, 14) and is either fitted on the soil surface or is secured in an almost upright position on a slope or something similar, whereby the wires (11, 12, 13, 14) of the wire netting (10) are manufactured from heavyduty steel and that the wire netting (10) woven by the wires (11, 12, 13, 14) has a tree-dimensional structure and in which the wire netting (10) consists of single, spiral-shaped bent wires (11, 12, 13, 14), **characterised in that** the wire (11, 12, 13, 14), which consists of heavy-duty steel, is fed at a defined angle of inclination (α) of at least into a bending mandrel (66) and is bent with a defined length (L) around the bending mandrel (66) by approximately 180°, so that the wire is repeatedly pushed on its longitudinal axis up to the bending mandrel (66) at the defined length (L) and is in each case bent around the bending mandrel by 180° until the wire becomes spiral-shaped.

10. A process according to claim 9, **characterised in that** a wedge-shaped bent wire is interwoven with a second wedge-shaped, bent wire, and the second with a third and this is repeated until the wire netting is produced which is of the desired size.

11. A device for carrying out the process according to claim 9 or 10, with a guide area (64') for a wire (11, 12, 13, 14) which has to be bent, a bending mandrel (66) and a bending unit (65) rotatable by a pivot drive (63), through which the wire (11, 12, 13, 14) is bendable around the bending mandrel (66), whereby the bending unit (65) is concentrically aligned with its swivel axis to the bending mandrel (66), **characterised in that** the bending mandrel (66) is adjusted to a clearance to the guide area (64'), and the bending unit (65) by its rotation bends the wire (11, 12, 13, 14), which is manufactured corrosion-resistant and from heavy-duty steel, at the angle of inclination (α) around the rotating mandrel (66) by approximately 180°, and that a feeding device is provided, which pushes the wire around the length (L) along its longitudinal axis in the guide area (64').

## Revendications

1. Treillis en fil métallique pour protéger des chutes de pierres ou pour consolider une couche superficielle du sol, lequel est tressé en des fils métalliques (11, 12, 13, 14) résistants à la corrosion et soit est disposé à la surface du sol, soit est fixé à une pente ou analogue dans une position approximativement verticale, dans lequel le treillis (10) en fil métallique est tressé en fils (11, 12, 13, 14) individuels recourbés en spirale, les fils ayant respectivement un angle de torsion (α), **caractérisé en ce que** les fils métalliques (11, 12, 13, 14) du treillis en fil métallique (10) sont fabriqués en un acier à grande résistance et que le treillis en fil métallique (10) tressé en ces fils métalliques (11, 12, 13, 14) a une structure tridimensionnelle.

2. Treillis en fil métallique selon la revendication 1, **caractérisé en ce que** le fil en acier à grande résistance présente une résistance nominale comprise entre 1 000 et 2 200 N/mm² et qu'il est possible d'utiliser dans ce but un fil en acier pour câbles métalliques ou un fil d'acier à ressort.

3. Treillis en fil métallique selon la revendication 1 ou 2, **caractérisé en ce que** les fils (11, 12, 13, 14) individuels recourbés en spirale ont un angle de torsion (α) compris entre 25° et 35°.

4. Treillis en fil métallique selon l'une des revendications précédentes 1 à 3, **caractérisé en ce que** le treillis en fil métallique (10) forme un treillis diagonal quadrangulaire ayant des mailles (17) en parallélogramme et une structure tridimensionnelle en sommier.

5. Treillis en fil métallique selon la revendication 4, **caractérisé en ce que** le treillis en fil métallique (10) formé de façon tridimensionnelle a une épaisseur (10') qui représente un multiple de l'épaisseur du fil.

6. Treillis en fil métallique selon l'une des revendications précédentes, **caractérisé en ce que** les fils (11, 12, 13, 14) sont reliés à leurs extrémités de façon articulée les uns aux autres par paires au moyen de boucles (11 ", 12") ou analogues.

7. Treillis en fil métallique selon la revendication 6, **caractérisé en ce que** les fils, après avoir été recourbés en boucles (11 ", 12"), sont en outre munis de préférence de plusieurs noeuds (19) enlacés sur leur propre circonférence.

8. Treillis en fil métallique selon l'une des revendications précédentes, **caractérisé en ce que** le treillis en fil métallique (10) est maintenu par plusieurs éléments de fixation (15) lorsqu'il est utilisé pour consolider un talus, ces derniers présentant des plaquettes en griffe (15') qui appliquent le treillis sur le talus (45) et qui se composent d'une tôle ou d'un autre élément rond, ovale ou d'une autre forme analogue et de plusieurs griffes (15") en forme de coin qui dépassent en angle droit vers le bas de cette tôle.

9. Procédé de fabrication d'un treillis en fil métallique pour protéger des chutes de pierres ou pour consolider une couche superficielle, lequel est tressé en des fils métalliques (11, 12, 13, 14) résistants à la corrosion et soit est disposé à la surface du sol, soit est fixé à une pente ou analogue dans une position approximativement verticale, dans lequel les fils (11, 12, 13, 14) du treillis (10) en fil sont fabriqués en un acier à grande résistance et le treillis (10) en fil métallique tressé en ces fils métalliques a une structure tridimensionnelle et dans lequel le treillis (10) est constitué de fils (11, 12, 13, 14) individuels recourbés en spirale, **caractérisé en ce que** le fil métallique (11, 12, 13, 14) en un acier à grande résistance est conduit à au moins un mandrin de pliage (66) selon un angle de torsion (α) donné et recourbé à environ 180° sur une longueur (L) donnée autour du mandrin de pliage (66), **en ce que** le fil est poussé plusieurs fois selon son axe longitudinal par rapport au mandrin de pliage (66) selon une longueur (L) donnée et est à chaque fois recourbé de 180° autour du mandrin de pliage jusqu'à ce que ce fil ait une structure en spirale.

10. Procédé selon la revendication 9 **caractérisé en ce qu'**un fil recourbé en spirale est tressé avec un deuxième fil recourbé en spirale, le deuxième avec un troisième et ainsi de suite jusqu'à ce qu'on ait fabriqué le treillis en fil métallique de la dimension souhaitée.

11. Dispositif pour exécuter le procédé selon la revendication 9 ou 10, comprenant une surface de guidage (64') pour un fil (11, 12, 13, 14) à recourber, un mandrin de pliage (66) et une unité de pliage (65) qui peut être tournée par un entraînement pivotant (63) et par laquelle le fil (11, 12, 13, 14) peut être recourbé autour du mandrin de pliage (66), l'unité de pliage (65) avec son axe de pivotement étant disposée de façon concentrique par rapport au mandrin de pliage (66), **caractérisé en ce que** le mandrin de pliage (66) est à distance de la surface de guidage (64') et que lors du pivotement l'unité de pliage (65) recourbe - à environ 180° autour du mandrin de pliage (66) avec un angle de torsion (α) - le fil (11, 12, 13, 14) qui est centré par elle, qui est fabriqué pour résister à la corrosion et en un acier à grande résistance et qu'il est prévu un dispositif d'avancée qui pousse sur la surface de guidage (64') le fil de la longueur (L) le long de son axe longitudinal.
